# EUROPÄISCHE PATENTSCHRIFT

(11) **EP 1 103 022 B1**
(45) Veröffentlichungstag und Bekanntmachung des Hinweises auf die Patenterteilung: **27.03.2002**
(21) Anmeldenummer: 99944293.2
(22) Anmeldetag: 23.07.1999
(51) Int. Cl.: G05B 19/418, G06F 13/368

(54) **KOMMUNIKATIONSVERFAHREN**
METHOD OF COMMUNICATION
PROCEDE DE COMMUNICATION

(30) Priorität: 06.08.1998 EP 98114800
(43) Veröffentlichungstag der Anmeldung: 30.05.2001
(73) Patentinhaber: SIEMENS AKTIENGESELLSCHAFT, 80333 München (DE)
(72) Erfinder: STEINDL, Günter, D-92284 Poppenricht (DE)
(86) Internationale Anmeldenummer: EP9905296
(87) Internationale Veröffentlichungsnummer: WO0008532

(56) Entgegenhaltungen:
- EP-A- 0 603 100
- US-A- 4 888 726
- US-A- 5 644 754
- US-A- 5 654 969

## Beschreibung

Die vorliegende Erfindung betrifft ein Kommunikationsverfahren zur Kommunikation zwischen zur Steuerung und/oder Überwachung eines technischen Prozesses vorgesehenen Kommunikationsteilnehmern, die über ein Bussystem, insbesondere einen Feldbus, kommunikativ miteinander verbunden sind und die anhand ihrer Adresse identifizierbar sind, wobei jeder Kommunikationsteilnehmer eine erste Gruppe von Referenzen als sogenannte Service Access Points verwaltet.

Mit der EN 50 170 Part I wird ein Modell für die Verwaltung von Empfangsressourcen definiert. Diese Definition erweitert quasi die Quell- und Zieladressen der beteiligten Kommunikationsteilnehmer und stellt letztlich eine Referenz, anhand derer ein- bzw. ausgehende Daten auch unterschiedlicher Kommunikationsbeziehungen eindeutig handhabbar sind, dar. Diese erweiterten Quell- und Zieladressen werden im folgenden als Service Access Points, kurz SAP, bezeichnet. Exemplarisch erweitert sich damit eine Verbindungsbeziehung, die zuvor durch die Angabe des Senders und Empfängers, z.B. [Sender: Station 1, Empfänger: Station 3] definiert werden konnte, um die Angabe jeweils eines Service Access Points für den beteiligten Kommunikationsteilnehmer, also z.B. zu [Sender: Station 1.SAP3, Empfänger: Station 3.SAP5]. Auf diese Weise bleiben für jeweils einen Kommunikationsteilnehmer auch Kommunikationsbeziehungen zu mehreren anderen Kommunikationsteilnehmern jeweils eindeutig handhabbar, sofern jeder dieser Kommunikationsbeziehungen jeweils ein eindeutiger Service Access Point zur Verfügung gestellt werden kann.

Bei der Mehrzahl der Kommunikationsbeziehungen werden die SAPs für die jeweilige Kommunikationsbeziehung implizit durch die Projektierung festgelegt. Darüber hinaus gibt es auch Kommunikationsbeziehungen, bei denen der Sender zunächst ein Telegramm an den potentiellen Empfänger schickt und von dem potentiellen Empfänger als Rückmeldung einen freien Service Access Point zurückgeliefert bekommt, über den daraufhin die Daten an den potentiellen Empfänger abgesetzt werden können. Danach wird das eigentliche Telegramm an diesen Empfänger über den auf diese Weise ausgehandelten Service Access Point abgesetzt.

Da jedoch die Anzahl der zur Verfügung stehenden Service Access Points pro Kommunikationsteilnehmer begrenzt ist, ergibt sich daraus, daß die Anzahl möglicher Verbindungen, die in dieser Weise handhabbar sind, auf die Anzahl der Service Access Points beschränkt ist.

Üblicherweise wird für jeden Service Access Point festgelegt, welcher Kommunikationsteilnehmer das Recht hat, diesen Service Access Point zu benutzen. Für einen Service Access Point kann jedoch auch festgelegt werden, daß sämtliche beteiligten Kommunikationsteilnehmer diesen Service Access Point nutzen können. Auch wenn dies auf den ersten Blick die Anzahl der möglichen Verbindungen erhöht, kann die Nutzung ein und desselben Service Access Points durch mehrere Kommunikationsteilnehmer im Betrieb zu nicht tolerierbaren Problemen führen.

Wenn z.B. über einen Service Access Point, der für alle Kommunikationsteilnehmer freigegeben ist, ein erster Kommunikationsteilnehmer Daten sendet und dieser Kommunikationsteilnehmer als Reaktion auf seine gesendeten Daten unmittelbar eine Antwort, ein Response, erwartet, wird dieses Response unmittelbar im Anschluß an die empfangenen Daten nur dann versandt, wenn die Antwortdaten auch unmittelbar zur Verfügung stehen. Stehen die Antwortdaten dagegen nicht unmittelbar zur Verfügung, muß der Kommunikationsteilnehmer zu einem späteren Zeitpunkt noch einmal anfragen, ob die Daten jetzt bereit stehen. Greift in der Zwischenzeit ein anderer Kommunikationsteilnehmer auf den gleichen Service Access Point zu, was ihm ja nicht verwehrt ist, da der Service Access Point für alle Kommunikationsteilnehmer freigegeben ist, so gelangen die Daten, die eigentlich für den ersten Kommunikationsteilnehmer vorgesehen sind, plötzlich zu dem Kommunikationsteilnehmer, der in der Zwischenzeit, also zwischen dem ursprünglichen Senden und dem noch zu erfolgenden Abholen der Antwortdaten, auf den Service Access Point zugreift.

Die U.S.-Patenschrift 5,644, 754 beschreibt ein Kommunikationsverfarhren gemäß dem Oberbegriff des Anspruchs 1.

Die Aufgabe der vorliegenden Erfindung besteht also darin, bei einem bekannten Kommunikationsverfahren die zur Verfügung stehenden Verbindungsressourcen zu erweitern, ohne daß dabei die Qualität und die Sicherheit bzw. die Effektivität der Kommunikation beeinträchtigt wird.

Diese Aufgabe wird mit einem Kommunikationsverfahren zur Kommunikation zwischen zur Steuerung und/oder Überwachung eines technischen Prozesses vorgesehenen Kommunikationsteilnehmern, die über ein Bussystem kommunikativ miteinander verbunden sind und die anhand ihrer Adresse identifizierbar sind, wobei jeder Kommunikationsteilnehmer eine erste Gruppe von Referenzen als sogenannte Service Access Points verwaltet, dadurch gelöst, daß für zumindest einen der Service Access Points eine zweite Gruppe von Referenzen verwaltet wird, wobei der Zugriff auf eine individuelle Referenz aus dieser zweiten Gruppe von Referenzen anhand der Adresse des zugreifenden Kommunikationsteilnehmers erfolgt.

Die erste Gruppe von Referenzen, die Service Access Points, kann z.B. eine Gruppe von sogenannten Pointern, die auf einen zur Verfügung stehenden Speicherbereich zeigen, oder aber ein Feld, wobei jedes Feldelement einen bestimmten Speicherbereich zur Verfügung stellt, sein. Bei dem aus der Norm bekannten Kommunikationsverfahren dient der entweder über den Zeiger oder das Feldelement referenzierte Speicherbereich entweder direkt zur Zwischenspeicherung der Kommunikationsdaten oder er enthält eine geeignete Datenstruktur, welche die Speicherbereiche zur Zwischenspeicherung der Kommunikationsdaten angibt.

Im folgenden wird die Beschreibung fortgesetzt für die erstgenannte Alternative, wonach die Gruppe von Referenzen als Gruppe von Zeigern auf Speicherbereiche realisiert ist. Stehen insgesamt fünf Service Access Points zur Verfügung, so umfaßt die Gruppe von Referenzen folglich fünf Zeiger auf jeweils getrennte Speicherbereiche. Diese Speicherbereiche dienen entweder direkt oder indirekt, indem sie den tatsächlichen Speicherbereich mittels weiterer Zeiger referenzieren, zur Zwischenspeicherung ein- oder ausgehender Kommunikationsdaten.

Gemäß der Erfindung ist jetzt vorgesehen, daß für zumindest einen der Service Access Points eine zweite Gruppe von Referenzen verwaltet wird. Der dem Service Access Point entsprechende Zeiger zeigt also jetzt nicht direkt auf den weiter oben bereits beschriebenen Speicherbereich, sondern zeigt auf einen Speicherbereich, der seinerseits z.B. wieder eine Gruppe von Zeigern enthält. Erst die Zeiger aus dieser Gruppe zeigen tatsächlich auf die oben beschriebenen Speicherbereiche. Wenn jetzt ein Transfer von Daten an einen ersten Kommunikationsteilnehmer, beispielsweise mit der Adresse 1, über den gemäß der Projektierung festliegenden Service Access Point mit der Nummer 5 erfolgt und der Kommunikationsteilnehmer mit der Adresse 3 die Daten sendet, so wird gemäß der Erfindung zur Zwischenspeicherung der empfangenen Daten der fünfte Zeiger (Service Access Point 5) aus der ersten Gruppe von Referenzen ausgewählt und aus dem von diesem Zeiger adressierten Speicherbereich, der die zweite Gruppe von Referenzen enthält, der dritte Zeiger ausgewählt, denn der dritte Zeiger dieser zweiten Gruppe von Referenzen korrespondiert mit der Adresse 3 des datentransferierenden Kommunikationsteilnehmers.

Weitere Merkmale, Vorteile und Anwendungsmöglichkeiten der Erfindung ergeben sich aus den Unteransprüchen, der nachfolgenden Beschreibung eines Ausführungsbeispiels, anhand der Figuren und der Figuren selbst. Dabei bilden alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung.

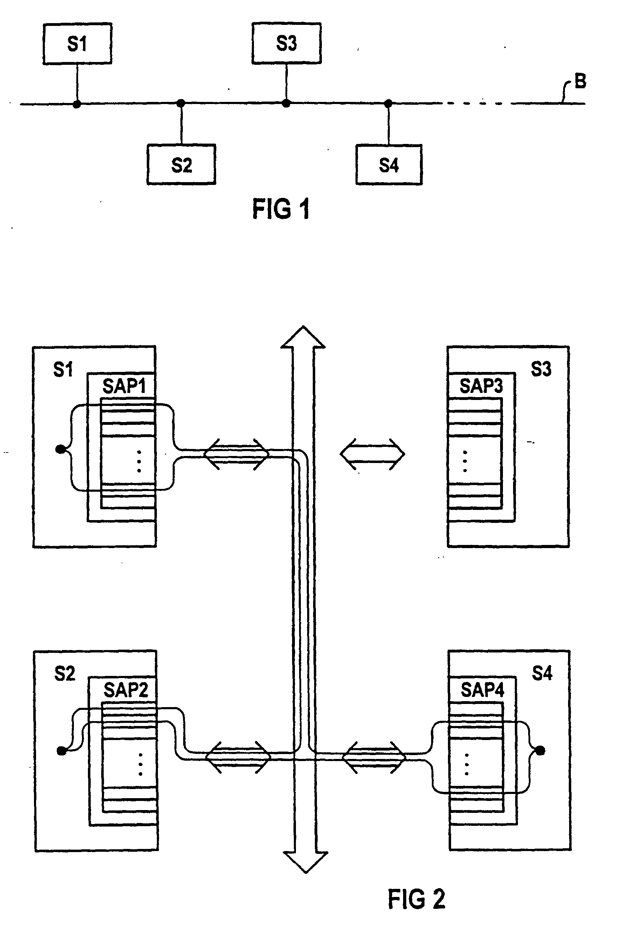

FIG 1 zeigt ein Bussystem B mit daran angeschlossenen Kommunikationsteilnehmern S1, S2, S3 und S4. Die Kommunikationsteilnehmer S1, S2, S3, S4 greifen zur Kommunikation untereinander auf das Bussystem B zu. Dabei bedienen sie sich eines für die Kommunikation über das Bussystem B definierten Protokolls. Im Ausführungsbeispiel handelt es sich bei diesem für das Bussystem definierten Protokoll um das sogenannte Profibusprotokoll, insbesondere Profibus-DP, auf dieses Protokoll bezieht sich auch die eingangs bereits genannten EN 50 170 Part I. Selbstverständlich ist die Erfindung grundsätzlich auch auf andere Kommunikationsprotokolle übertragbar.

FIG 2 zeigt die Kommunikationsteilnehmer S1, S2, S3, S4 gemäß FIG 1 in einer anderen Darstellung. Jeder Kommunikationsteilnehmer greift zur Kommunikation auf den Bus B zu. Dazu sind für jeden Kommunikationsteilnehmer Zugriffsmittel auf den Bus B vorgesehen, die üblicherweise in speziellen ASICs realisiert sind. Die per Soft- oder Firmware realisierte Funktionalität der Busanschaltung umfaßt dabei insbesondere die Funktionalität der Service Access Points SAP1, SAP2, SAP3, SAP4.

Bereits weiter oben wurde beschrieben, daß die Service Access Points SAP1, SAP2, SAP3, SAP4 quasi eine Quell- bzw. Zieladreßerweiterung der jeweils beteiligten Kommunikationsteilnehmer S1, S2, S3, S4 ermöglichen und damit eindeutige Kommunikationsbeziehungen eines Kommunikationsteilnehmers mit mehreren anderen Kommunikationsteilnehmern ermöglichen.

Gemäß FIG 2 besteht z.B. eine Kommunikationsbeziehung vom Kommunikationsteilnehmer S1 zum Kommunikationsteilnehmer S4, aber auch zum Kommunikationsteilnehmer S2. Dies bedeutet für die beteiligte Station S1 mindestens zwei Kommunikationsbeziehungen, die über die Auswahl eindeutiger Service Access Points unterscheidbar bleiben. Im Beispiel gemäß FIG 2 erfolgt die Verbindung zum Kommunikationsteilnehmer S4 über den ersten Service Access Point der Station S1 und die Kommunikation mit der Station S2 über den zweitletzten Service Access Point der Station S1. Ganz analoge Verhältnisse ergeben sich für die weiteren an den Kommunikationsbeziehungen beteiligten Kommunikationsteilnehmer S2 bzw. S4.

Weiter oben wurde auch bereits beschrieben, daß im Falle nicht ausreichender Service Access Points für alle zu projektierenden Kommunikationsbeziehungen bestimmte Service Access Points von mehreren bzw. insbesondere von allen Kommunikationsteilnehmern genutzt werden. Die damit einhergehenden Probleme bestehen insbesondere darin, daß, wenn eine Station, z.B. die Station S1, von einer anderen Station, z.B. der Station S4, Daten anfordert und diese Daten nicht unmittelbar bereitstehen, diese Daten zu einem späteren Zeitpunkt von der Station S1 erneut angefragt werden müssen. Greift in der Zwischenzeit, zwischen dem ersten und dem erneuten Anfragen der Station S1, eine andere Station, z.B. die Station S2, auf den für alle Kommunikationsteilnehmer nutzbaren Service Access Point der Station S4 zu, gelangen die eigentlich für die Station S1 bestimmten Daten irrtümlich zur Station S2.

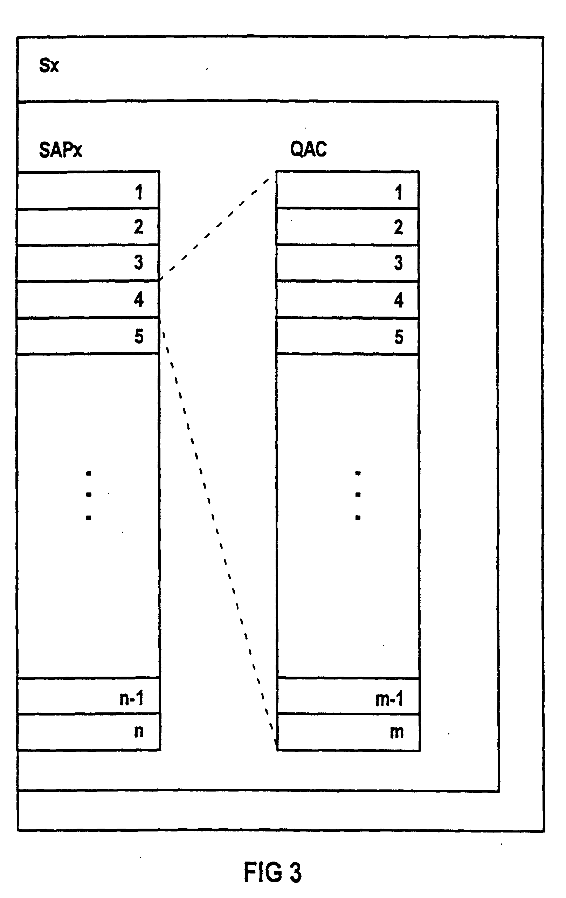

Um genau dies zu vermeiden, wird jedem Service Access Point eine Quelladreßfiltertabelle QAC zugeordnet, wie in FIG 3 dargestellt. Dadurch wird quasi jeder einzelne Service Access Point, der ja aufgrund seiner Eigenschaft als Referenz für sich schon eine Art "Benutzerfach" darstellt, nochmals in separate "Benutzerfächer" unterteilt. Jedes dieser Benutzerfächer ist dabei dem beteiligten Kommunikationsteilnehmer eindeutig über die Adresse des Kommunikationsteilnehmers und die damit korrespondierende Benutzerfachnummer zugeordnet.

Wenn also gemäß FIG 3, welche die erweiterte Funktionalität des Service Access Points z.B. der Station 4 aus FIG 2 zeigt, sowohl die Station S1 also auch die Station S2 den Service Access Point 4 der Station S4 nutzt, gelangen dennoch sämtliche Daten der Station S1 in das Benutzerfach mit der Nummer 1 und sämtliche Daten der Station S2 in das Benutzerfach mit der Nummer 2, auch wenn, wie vorstehend bereits dargelegt, der gleiche Service Access Point, nämlich der Service Access Point mit der Nummer 4, verwendet wird.

Ein erster Kommunikationsteilnehmer greift also bei einer Kommunikation mit einem weiteren Kommunikationsteilnehmer über einen vorher festgelegten oder ausgehandelten Service Access Point immer auf das Benutzerfach, dessen Nummer entweder direkt mit der Stationsnummer des ersten Kommunikationsteilnehmers korrespondiert, oder auf andere Weise, z.B. mit einer eindeutigen LookUpTable, zuordenbar ist. Da keine Adressenkollisionen am Bus toleriert werden, mithin also die Adressen der Kommunikationsteilnehmer stets eindeutig sind, ist sichergestellt, daß der Zugriff auf die Benutzerfächer jederzeit konfliktfrei erfolgt.

Die gegebenenfalls vorgesehene LookUpTable könnte z.B. einerseits die Adressen der jeweiligen Kommunikationsteilnehmer beinhalten und diesen zugeordnet jeweils eine natürliche Zahl aus einer auf- oder absteigenden Zahlenfolge, vorzugsweise mit 0 (Null) beginnend. Andererseits sind häufig die-Adressen der Kommunikationsteilnehmer derart codiert, daß durch einfaches Maskieren führender Bits aus jeder Stationsadresse eine natürliche Zahl gewonnen werden, die direkt als Benutzerfachnummer im Sinne der vorliegenden Erfindung interpretierbar ist.

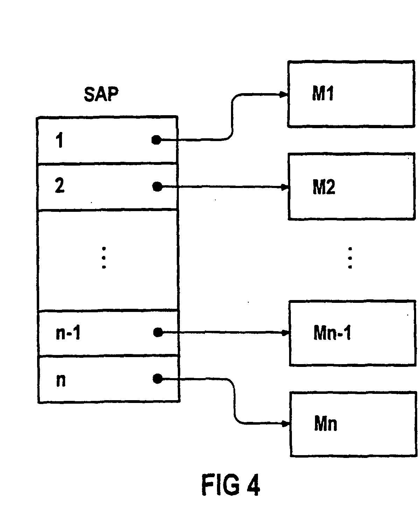

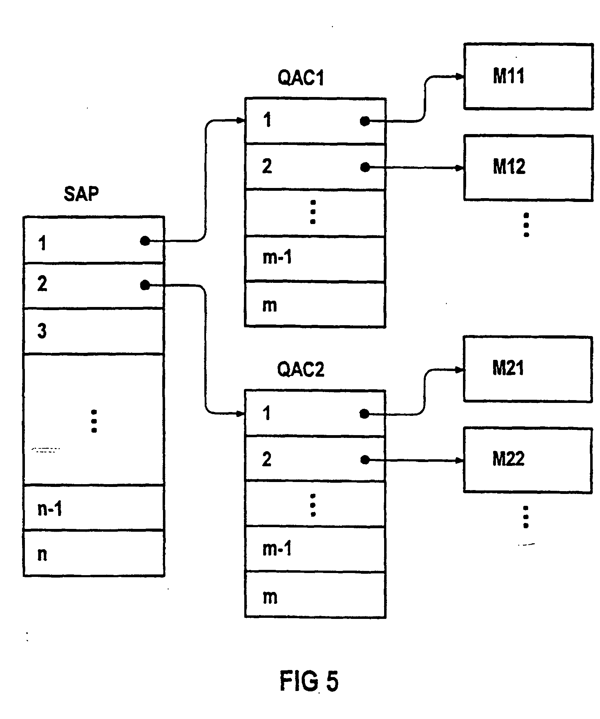

Die Verhältnisse im Speicher für jeweils als Zeiger ausgebildete Referenzen werden anhand der Figuren 4 und 5 verdeutlicht. Eingangs sei jedoch nochmals darauf hingewiesen, daß die Referenzen nicht notwendigerweise als Zeiger ausgebildet sein müssen. So ist es z.B. auch möglich, entsprechende Datenstrukturen zu definieren, wobei auf die einzelnen Komponenten einer solchen Datenstruktur direkt anhand der jeweiligen Bezeichner zugriffen werden kann.

FIG 4 zeigt eine mögliche Speicherbenutzung für die bereits bekannten Service Access Points. Die erste Gruppe von Referenzen, in FIG 4 mit dem Bezugszeichen SAP bezeichnet, umfaßt eine Gruppe von in einem eindimensionalen Feld organisierten Zeigern. Mit der Feldnummer, z.B. 2, kann auf den jeweiligen Service Access Point zugegriffen werden. Die Feldnummer korrespondiert somit unmittelbar mit einem Service Access Point. In dem unter der jeweiligen Nummer referenzierbaren Feld findet sich zumindest ein Zeiger auf einem Speicherbereich, der zur Zwischenspeicherung der Kommunikationsdaten vorgesehen ist. So zeigt der dem Service Access Point 1 zugeordnete Zeiger auch den Speicherbereich M1, der dem Service Access Point 2 zugeordnete Zeiger auch den Speicherbereich M2, usw.

Dagegen zeigt FIG 5 eine mögliche Nutzung des Speichers im Rahmen des im Patentanspruch 1 wiedergegebenen Kommunikationsverfahren. Wieder werden die Service Access Points in einem eindimensionalen, über die jeweilige Feldnummer referenzierbaren Feld organisiert. Jedes dieser Felder weist zumindest einen Zeiger auf, der im Gegensatz zu den in FIG 4 dargestellten Verhältnissen jetzt nicht unmittelbar auf einen Speicherbereich, sondern auf eine Tabelle QAC zur Quelladreßcodierung zeigt. Sendet ein Kommunikationsteilnehmer mit einer Adresse, die direkt oder indirekt mit der natürlichen Zahl 2 korrespondiert, an einen Kommunikationsteilnehmer, der ein Kommunikationsverfahren, wie es in Patentanspruch 1 wiedergegeben ist, ausführen kann, so gelangen die gesendeten Daten nach dem nachfolgend zu erläuternden Schema in die jeweiligen Speicherbereiche:

Gemäß der Projektierung ist für die Kommunikation ein Service Access Point. vorgesehen. Es soll angenommen werden, daß der Service Access Point 1 verwendet wird. Diesem Service Access Point ist ein Zeiger zugeordnet, der auf die Tabelle zur Quelladreßcodierung QAC1 zeigt. Die Adresse des datentransferierenden Teilnehmers ist 2 oder korrespondiert mit der Zahl 2. Daher wird aus der Tabelle zur Quelladreßcodierung QAC1 das Element 2 ausgewählt. Der Zeiger dieses Elementes zeigt auf den Speicherbereich M12. Dieser Speicherbereich steht individuell nur für diesen Kommunikationsvorgang zur Verfügung. Daten von einem anderen Kommunikationsteilnehmer, beispielsweise mit der Adresse 1, landen in dem vom Speicherbereich M12 vollständig getrennten Speicherbereich M11.

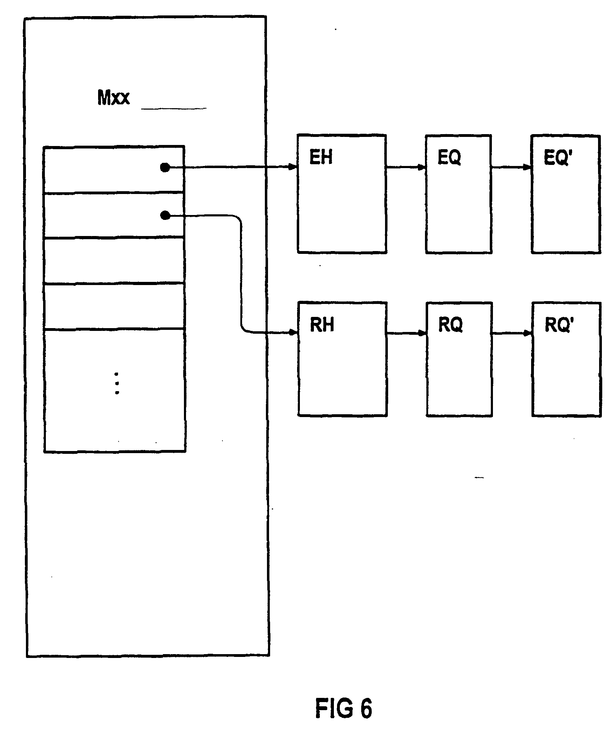

Es sei angemerkt, daß die jeweiligen Speicherbereiche M11, M12, ..., M21, M22, ..., ... nicht notwendigerweise als linear adressierbarer Speicher verwendet werden. In FIG 6 ist eine mögliche Form der Nutzung der Speicherbereiche dargestellt. Demnach umfaßt der Speicherbereich zumindest einen Zeiger auf eine Empfangswarteschlange mit einem ersten Element EH, dem Kopfelement EH, der Empfangswarteschlange und Elementen der Empfangswarteschlange EQ, EQ'. Ganz analog wird auch eine Sendewarteschlange mit dem Kopf der Sendewarteschlange RH und Elementen der Sendewarteschlange RQ und RQ' verwaltet.

Die mit der Quelladressencodierung bewirkte eindeutige Zuordenbarkeit von über den Bus übertragenen Daten auch bei Benutzung ein und desselben Access Points macht sich insbesondere vorteilhaft im Rahmen des Querverkehrs bemerkbar. Zu diesem Zweck wird beim Querverkehr ein Service Access Point verwendet, der nur für den Querverkehr vorgesehen ist (Grundsätzlich ist jedoch selbstverständlich der Querverkehr für oder mit jedem Service Access Point möglich).

Im folgenden wird dieser Service Access Point als Querverkehr-Service Acess Point bezeichnet. Die Kennung und Codierung dieses Querverkehr-Service Access Points ist im Telegramm insbesondere fest vorgegeben, so daß stets dieser Service Access Point verwendet wird, wenn die Möglichkeiten des Querverkehrs genutzt werden sollen. Da auch diesem Querverkehr-Service Access Point eine Quelladreßcodierungstabelle zugeordnet ist, gelangt jedes Telegramm von einem Publisher im Rahmen des Querverkehrs an eine eindeutige Adresse im Speicher, die durch den Querverkehr-Service Access Point in Verbindung mit der Quelladresse des Publishers festgelegt ist.

## Patentansprüche

1. Kommunikationsverfahren zur Kommunikation zwischen zur Steuerung und/oder Überwachung eines technischen Prozesses vorgesehenen Kommunikationsteilnehmern (S1, S2, S3, S4), die über ein Bussystem (B) kommunikativ miteinander verbunden sind und die anhand ihrer Adresse identifizierbar sind, wobei jeder Kommunikationsteilnehmer eine erste Gruppe von Referenzen als sogenannte Service Access Points verwaltet, **dadurch gekennzeichnet, daß** für zumindest einen der Service Access Points eine zweite Gruppe von Referenzen verwaltet wird, wobei der Zugriff auf eine individuelle Referenz aus dieser zweiten Gruppe von Referenzen anhand der Adresse des zugreifenden Kommunikationsteilnehmers erfolgt.

2. Kommunikationsverfahren nach Anspruch 1, **dadurch gekennzeichnet, daß** zur Verwaltung der zweiten Gruppe von Referenzen eine über die Gruppe der Referenzen eindeutige natürliche Zahl jeweils eindeutig mit einer Referenz korrespondiert.

3. Kommunikationsverfahren nach Anspruch 2, **dadurch gekennzeichnet, daß** jede Adresse eines an das Bussystem angeschlossenen Kommunikationsteilnehmers entweder eindeutig unmittelbar einer der eindeutig mit einer Referenz korrespondierenden natürlichen Zahlen entspricht oder eindeutig in eine der eindeutig mit einer Referenz korrespondierenden natürlichen Zahlen überführt werden kann.

## Claims

1. Communication method for communication between communication participants (S1, S2, S3, S4), which are provided for control and/or monitoring of a technical method, are connected in communication with each other using a bus system (B), and can be identified using their addresses, whereby each communication participant manages a first group of references as so-called service access points, **characterised in that** for at least one of the service access points a second group of references is managed, whereby access to an individual reference from this second group of references is carried out using the address of the accessing communication participant.

2. Communication method according to Claim 1, **characterised in that** for management of the second group of references a natural number unique across the group of references corresponds unambiguously to a reference in each case.

3. Communication method according to Claim 3, **characterised in that** each address of a communication participant connected to the bus system either corresponds unambiguously directly to one of the natural numbers corresponding unambiguously with a reference or can be transferred unambiguously into one of the natural numbers corresponding unambiguously with a reference.

## Revendications

1. Procédé de communication pour la communication entre des participants à des communications (S1, S2, S3, S4) qui sont prévus pour la commande et/ou pour la surveillance d'un processus technique, qui sont reliés entre eux pour la communication par l'intermédiaire d'un système de bus (B) et qui sont identifiables à l'aide de leur adresse, chaque participant à des communications gérant un premier groupe de références appelées Service Access Points, **caractérisé par le fait qu'**un deuxième groupe de références est géré pour au moins l'un des Service Access Points, l'accès à une référence individuelle de ce deuxième groupe de références s'effectuant à l'aide de l'adresse du participant à des communications qui effectue l'accès.

2. Procédé de communication selon la revendication 1, **caractérisé par le fait que**, pour la gestion du deuxième groupe de références, un nombre naturel univoque sur tout le groupe des références correspond à chaque fois de manière univoque à une référence.

3. Procédé de communication selon la revendication 2, **caractérisé par le fait que** chaque adresse d'un participant à des communications qui est raccordé au système de bus soit correspond de manière univoque directement à l'un des nombres naturels correspondant de manière univoque à une référence soit peut être transformé de manière univoque en l'un des nombres naturels correspondant de manière univoque à une référence.
